# EUROPÄISCHE PATENTSCHRIFT

(11) **EP 2 915 468 B1**
(45) Veröffentlichungstag und Bekanntmachung des Hinweises auf die Patenterteilung: **17.05.2017**
(21) Anmeldenummer: 15168070.9
(22) Anmeldetag: 19.05.2015
(51) Int. Cl.: A47J 37/07

(54) **KUGELGRILL MIT HÖHENEINSTELLBAREM GRILLROST**
KETTLE GRILL WITH HEIGHT ADJUSTABLE GRILL
BARBECUE BOULE ÉQUIPÉ D'UNE GRILLE RÉGLABLE EN HAUTEUR

(43) Veröffentlichungstag der Anmeldung: 09.09.2015
(73) Patentinhaber: TEPRO Garten GmbH, 63322 Rödermark (DE)
(72) Erfinder: WITSCH, Carsten, 52064 Aachen (DE)
(74) Vertreter: Müller, Karl-Ernst

(56) Entgegenhaltungen:
- DE-U1-202009 008 071
- US-A- 3 664 322
- US-A1- 2012 318 255

## Beschreibung

Die vorliegende Erfindung betrifft einen Kugelgrill mit einer Grillschale zur Aufnahme der Grillkohle und mehreren auf einer Innenseite der Grillschale an der Grillschale befestigten Funktionsteilen mit jeweils mehreren Auflageflächen, auf die ein Grillrost in Abhängigkeit von seiner Ausrichtung mit unterschiedlichem Abstand zu der in der Grillschale aufnehmbaren Grillkohle auf jeweils miteinander korrespondierende Auflagefläche der Funktionsteile auflegbar ist.

Ein Kugelgrill ist beispielsweise aus US 6,318,356 B1 bekannt. An der Innenseite der Grillschale ist ein aus einem streifenförmigen Metall gebildetes Formteil angeordnet, das mit einem zentralen Abschnitt an der Grillschale befestigt ist. Auf das nach innen gebogene untere Ende des Formteils ist ein Kohlerost auflegbar, während auf das obere nach innen gebogene Ende des Formteils der Grillrost auflegbar ist. Der Abstand zwischen dem Grillrost und dem Kohlerost kann nicht geändert werden, so dass während des Grillens die auf das auf dem Grillrost angeordnete Grillgut wirkende Temperatur nicht schnell geändert werden kann. Eine Änderung der Temperatur kann lediglich indirekt dadurch erfolgen, dass die Luftzufuhr durch eine am Boden der Grillschale angeordnete Belüftungseinrichtung geändert wird.

Ein Grillrost mit den eingangs genannten Merkmalen ist aus US 3 664 322 A bekannt, wobei der dort dargestellte Grillrost durch Ausrichtung in unterschiedliche Richtungen zwar in unterschiedlicher Höhe angeordnet werden kann, hierzu weist der Grillrost allerdings an seinem Umfang unterschiedlich tief eingreifende Einschnürungen auf, welche aufwendig herzustellen sind.

Aufgabe der vorliegenden Erfindung ist es daher, die mit Bezug zum Stand der Technik geschilderten Probleme zumindest teilweise zu lösen und insbesondere einen Kugelgrill anzugeben, bei dem die auf das Grillgut einwirkende Hitze schnell und einfach geändert werden kann und der einfacher herzustellen ist.

Gelöst wird diese Aufgabe mit einem Kugelgrill mit den Merkmalen des unabhängigen Anspruchs. Vorteilhafte Weiterbildungen des Kugelgrills sind in den abhängigen Ansprüchen und in der Beschreibung angegeben, wobei Merkmale der vorteilhaften Weiterbildungen in technologisch sinnvoller Weise beliebig miteinander kombinierbar sind.

Gelöst wird die Aufgabe insbesondere durch einen Kugelgrill mit den eingangs genannten Merkmalen, wobei jedes Funktionsteil vertikal und in Umfangsrichtung der Grillschale versetzt zueinander angeordnete Auflageflächen ausbildet.

Es ist also insbesondere vorgesehen, dass der Grillrost und die Funktionsteile so ausgebildet sind, dass der Grillrost mit unterschiedlichem Abstand zu einem Boden der Grillschale bzw. zu einem in der Grillschale angeordneten Kohlerost auf die Funktionsteile auflegbar ist. Dies wird dadurch erreicht, dass die mehreren an jedem Funktionsteil ausgebildeten Auflageflächen vertikal und horizontal zueinander versetzt sind. Um den Abstand zwischen Grillrost und der Kohle zu ändern, muss der Grillrost von den Funktionsteilen abgehoben werden und in seiner Ebene soweit gedreht werden, dass er auf anderen, miteinander korrespondierenden Auflageflächen der Funktionsteile wieder aufgelegt werden kann. An dem Grillrost können Griffe angebracht sein, mit denen der Grillrost abgehoben und verdreht werden kann. Alternativ könnte vorgesehen sein, dass lösbare Griffe zum Abheben des Grillrosts an den Grillrost anbringbar sind. Mit den Funktionsteilen kann auf günstige Weise eine einfache Verstellbarkeit des Abstandes des Grillrostes zu der Grillkohle erreicht werden.

Unter Kugelgrill werden insbesondere solche Grills verstanden sein, die einen kreisrunden Querschnitt in einer horizontalen Ebene haben, in der der Grillrost angeordnet ist. Es ist daher bevorzugt, für die Erfindung aber an sich unerheblich, dass die Grillschale unterhalb der Ebene des Grillrosts und der auf die Grillschale auflegbare Deckel kugelförmig sind. Ausreichend ist, dass der Querschnitt der Grillschale in der Ebene des Grillrosts einen kreisrunden Querschnitt hat.

Die Auflageflächen sind insbesondere an einer nach oben gerichteten Stirnfläche des Funktionsteils ausgebildet, so dass der Grillrost nach der Ausrichtung mit einer ausschließlich vertikalen Bewegung auf die Auflageflächen auflegbar ist. Die an der Innenseite der Grillschale angeordneten Funktionsteile sind bevorzugt alle identisch ausgebildet und auf der gleichen Höhe an der Grillschale befestigt, so dass die entsprechenden Auflageflächen an den Funktionsteilen, auf die der Grill in einem bestimmten Abstand zu der Grillkohle aufgelegt ist, miteinander korrespondieren. Mit der Ausrichtung des Grillrosts ist insbesondere dessen Ausrichtung in der Ebene des Grillrosts zu der Grillschale gemeint.

Mit zunehmender Beliebtheit des Grillens sind auch eine Vielzahl von Zubehörteilen entwickelt worden, mit denen das Grillgut auf unterschiedliche Weise zubereitet werden kann. Diese Zubehörteile müssen auf geeignete Weise an einem Kugelgrill befestigt werden. Einem weiteren eigenständigen Aspekt der Erfindung folgend, wird daher auch unabhängig von den an den Funktionsteilen ausgebildeten Auflageflächen vorgeschlagen, dass an einer Oberseite eines Funktionsteils mindestens eine Ausnehmung zur lösbaren Befestigung eines Zubehörteils ausgebildet ist. Eine Gruppe von Zubehörteilen könnte beispielsweise aus zwei Streben bestehen, die an dem Rand des Grills im Wesentlichen parallel zueinander, insbesondere über den Grillrost verlaufen und auf die Spieße mit Grillgut aufgelegt werden können. Ein weiteres Zubehörteil könnte beispielsweise ein Hilfsgrillrost sein, der mit einem wesentlich größeren Abstand über dem Hauptgrillrost angeordnet ist. Der Hilfsgrillrost hat insbesondere eine andere Form und Größe als der Hauptgrillrost. Beispielsweise hat der Hilfsgrillrost einen teilringförmigen Grillgutbereich, von dem sich Befestigungsstreben nach unten zu den Ausnehmungen in den Funktionsteilen erstrecken. Auf diesem Hilfsgrillrost könnten beispielsweise fertig gegrillte Grillwaren zum Warmhalten aufgelegt werden. Zudem könnte ein Zubehörteil ein außen um die Grillschale verlaufende Stange sein, an der Hilfsmittel, wie zum Beispiel Grillzangen, aufgehängt werden können. Insbesondere durch die Kombination der Auflageflächen und den Ausnehmungen vereint das Funktionsteil mehrere Funktionen zum Befestigen von Grillrost und Zubehörteilen.

Insbesondere sind an der Oberseite des Funktionsteils zwei Bohrungen ausgebildet, die bevorzugt dafür vorgesehen sind, dass an ihnen Zubehörteile befestigt werden, die sich in einem in jeweils eine Bohrung von unterschiedlichen Funktionsteilen eingesteckten Zustand über den Grillrost erstrecken. Somit können beispielsweise an ihren Enden in jeweils eine Bohrung eines Funktionsteils eingesteckte Streben an dem Grill befestigt werden, auf die dazu quer verlaufende Spieße aufgelegt werden.

Außerdem kann vorgesehen sein, dass an der Oberseite des Funktionsteils ein länglicher Schlitz ausgebildet ist, bevorzugt zur Befestigung von einem sich ausgehend von den Funktionsteilen außen um die Grillschale von einem Funktionsteil zu einem benachbarten Funktionsteil erstreckendem Zubehörteil. In die Schlitze von zwei benachbarten Funktionsteilen kann also ein sich außen um die Grillschale verlaufendes Zubehörteil eingehängt werden, an dem beispielsweise Grillutensilien aufgehängt werden können.

Bevorzugt sind die Auflageflächen eines jeden Funktionsteiles in ihrer Gesamtheit treppenförmig angeordnet. Benachbarte Auflageflächen eines Funktionsteils sind somit in Umfangsrichtung der Grillschale bzw. horizontal unmittelbar angrenzend aneinander oder nur mit einem geringen Abstand zueinander angeordnet, wobei die benachbarten Auflageflächen vertikal zueinander versetzt sind. Durch die treppenförmige Anordnung wird erreicht, dass durch die Drehung des Grillrosts in eine Richtung der Abstand zu der Grillkohle verringert werden kann und durch die Drehung und spätere Auflage auf Auflageflächen in die entgegengesetzte Richtung der Abstand zu der Grillkohle vergrößert werden kann.

Damit der Grillrost bei Auflage auf korrespondierenden Auflageflächen eine vorgegebene Stellung einnimmt, ist vorgesehen, dass jede Auflagefläche einen unebenen Verlauf mit einem Tiefpunkt aufweist. Die Auflageflächen haben in einer Schnittebene beispielsweise einen parabelförmigen Verlauf, wobei der Grillrost bei Auflage auf die Auflageflächen selbsttätig in die entsprechenden Tiefpunkte der Auflagenflächen gelangt.

Bevorzugt kann vorgesehen sein, dass jede Auflagefläche seitlich von einer Anschlagsfläche begrenzt ist. Damit der Grillrost bei einer solchen Ausgestaltung auf andere Auflageflächen aufgelegt werden kann, muss der Grillrost zunächst über die Anschlagsflächen hinaus abgehoben werden und kann erst im folgenden verdreht werden. Hierdurch wird insbesondere ein unbeabsichtigtes Verdrehen des auf den Auflageflächen aufliegenden Grillrosts verhindert.

Bevorzugt weist der Grillrost Auflageelemente auf, die über einen Grillgutbereich des Grillrosts überstehen und mit denen der Grillrost auf den korrespondierenden Auflageflächen der Funktionsteile aufliegt. Während bei Kugelgrills ohne Höhenverstellung des Grillrosts der Grillgutbereich des Grillrosts unmittelbar an eine Seitenwand der Grillschale heranreichen kann, sollte der Grillgutbereich gemäß einer Ausgestaltung der Erfindung eine umlaufende Lücke zu der Grillschale aufweisen, in der die Funktionsteile an der Grillschale befestigt sind. Der Grillrost ragt mit den Auflageelementen in diese Lücke hinein und wird mit den Auflageelementen auf die Auflageflächen des Funktionsteils aufgelegt. Insbesondere sind die Auflageelemente durch über den Grillgutbereich überstehende Streben des Grillrosts gebildet.

In einer Ausführungsform ist vorgesehen, dass die Funktionsteile mit einem auf die Außenseite der Grillschale ragenden Befestigungselement an dem Grill befestigt sind und auf der Außenseite der Grillschale eine Halterung mit dem Befestigungselement an der Grillschale befestigt ist. Das Befestigungselement ist insbesondere eine das Funktionsteil an die Innenseite der Grillschale festlegende Schraube, wobei das Befestigungselement gleichzeitig zur Befestigung der Halterung auf der Außenseite der Grillschale dient. Die Halterung ist insbesondere ein Winkel, mit dem die Grillschale an einem Grillwagen befestigt werden kann.

Die Erfindung sowie das technische Umfeld werden im Folgenden anhand der Figuren erläutert, wobei darauf hinzuweisen ist, dass die Figuren eine bevorzugte Ausführungsform der Erfindung zeigen. Es zeigen schematisch
- Fig. 1:: einen Kugelgrill mit einem Grillrost in einer ersten Stellung,
- Fig. 2:: den Kugelgrill mit dem Grillrost in einer zweiten Stellung,
- Fig. 3:: ein Funktionsteil,
- Fig. 4:: den Kugelgrill mit einem ersten Zubehörteil,
- Fig. 5:: den Kugelgrill mit einem zweiten Zubehörteil und
- Fig. 6:: den Kugelgrill mit einem dritten Zubehörteil.

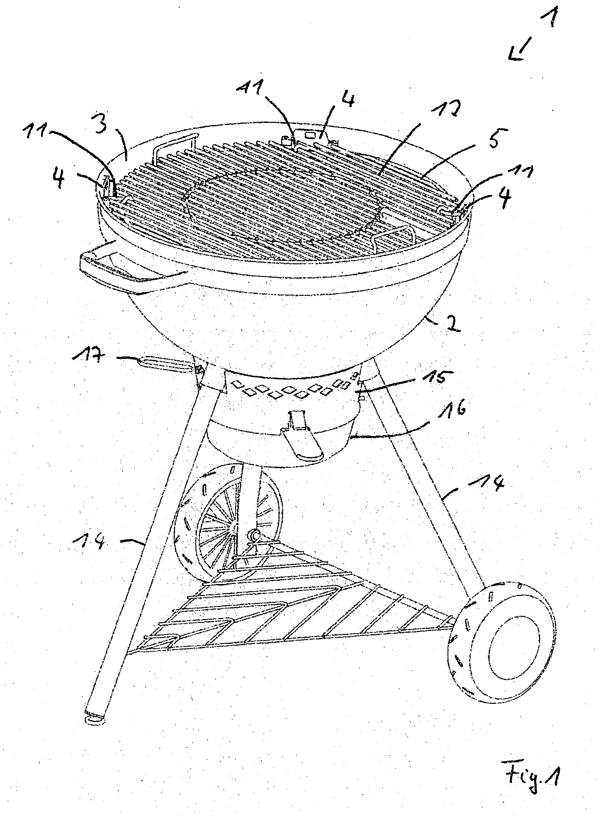

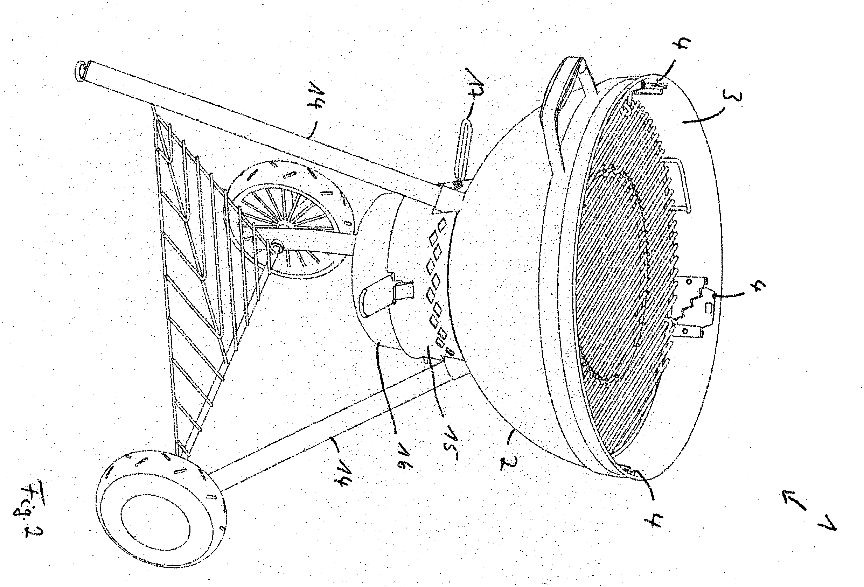

Der in den Fig. 1 und 2 dargestellte Kugelgrill 1 umfasst eine Grillschale 2, an der auf einer Außenseite unten drei Beine 14 angebracht sind. Zudem ist zwischen den Beinen 14 ein Haltering 15 angeordnet, an dem ein Aschetopf 16 befestigbar ist. Durch den Haltering 15 steht ein Betätigungsgriff 17 hervor, mit dem eine Vorrichtung zur Belüftung und Ascheentfernung der Grillschale 2 bedient werden kann.

Auf einer Innenseite 3 der Ascheschale 2 sind vier Funktionsteile 4 befestigt, auf die ein Grillrost 5 aufgelegt ist. Der Grillrost 5 weist einen kreisrunden Grillgutbereich 12 aus einer Vielzahl von Stäben auf, wobei Auflageelemente 11 über den kreisrunden Grillgutbereich 12 überstehen. Die Auflageelemente 11 werden von den entsprechend über den kreisrunden Grillgutbereich 12 überstehenden und abgewinkelten Stäben gebildet. Mit den Auflageelementen 11 liegt der Grillrost 5 auf den Funktionsteilen 4 auf.

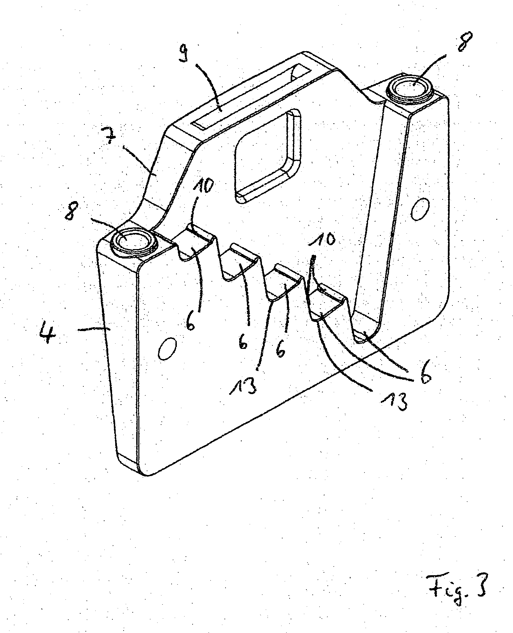

Ein Funktionsteil 4 ist in Fig. 3 dargestellt. Das Funktionsteil 4 weist mehrere Auflageflächen 6 auf, die treppenförmig an dem Funktionsteil 4 angeordnet sind. Jede Auflagefläche 6 weist einen Tiefpunkt 13 auf und ist seitlich von Anschlagsflächen 10 begrenzt. An einer Oberseite 7 des Funktionsteils 4 sind zwei Bohrungen 8 und ein Schlitz 9 ausgebildet.

Die vier Funktionsteile 4 sind so auf der Innenseite 3 der Grillschale 2 befestigt, dass der Grillrost 5 mit seinen vier Auflageelementen 11 jeweils auf einer Auflagefläche 6 der vier Funktionsteile 4 aufgelegt wird, welche somit miteinander korrespondieren. Liegt der Grillrost 5 auf den jeweils obersten Auflageflächen 6 auf, so ist der Abstand des Grillrosts 5 zu einem unten in der Grillschale 2 angeordneten Kohlerost am größten (s. Fig. 1). Der Grillrost 5 kann durch Abheben von den obersten Auflageflächen 6 und durch Drehung in seiner Ebene neu ausgerichtet werden und auf weiter unten angeordnete, korrespondierende Auflageflächen 6 aufgelegt werden, so dass der Abstand zwischen dem Grillrost 5 und dem Kohlerost verringert werden kann, wodurch die auf das Grillgut wirkende Temperatur schnell geändert werden kann (s. Fig. 2). Durch die Ausbildung der Tiefpunkte 13 gelangt der Grillrost 5 regelmäßig in eine durch die Tiefpunkte 13 vorgegebene Stellung.

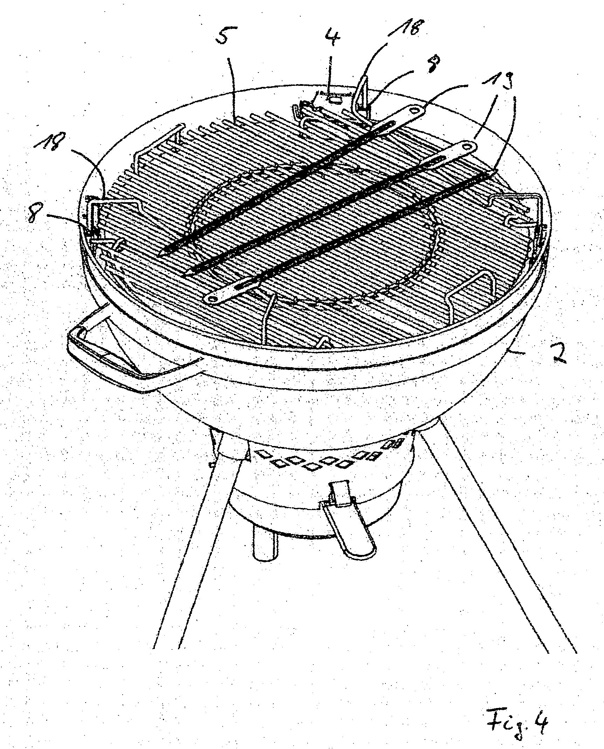

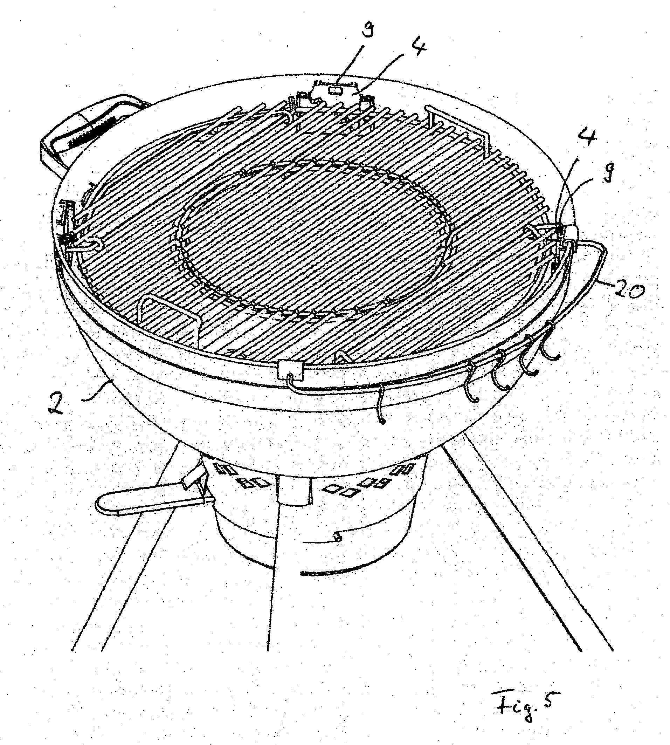

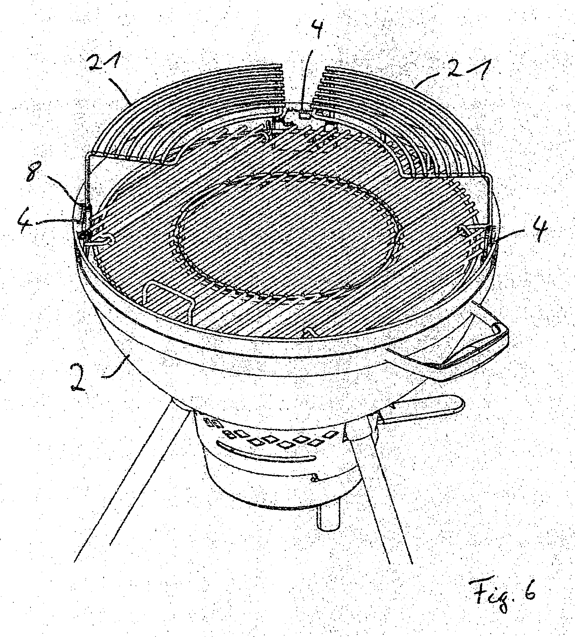

In die Bohrungen 8 und den Schlitz 9 können Zubehörteile für den Kugelgrill 1 eingesteckt werden. So können beispielsweise in Bohrungen 8 von benachbarten Funktionsteilen 4 über den Grillgutbereich 12 erstreckende Streben 18 eingestreckt werden, auf die dann wiederum Spieße 19 mit Grillgut aufgelegt werden können (s. Fig. 4). In die Schlitze 9 wird bevorzugt eine Befestigungsstange 20 eingesteckt, die sich von einem Funktionsteil 4 nach außen und entlang der Grillschale 2 zu einem benachbarten Funktionsteil 4 erstreckt. An diese Befestigungsstange 20 kann beispielsweise Grillbesteck angehängt werden (s. Fig. 5). Ein in Fig. 6 dargestelltes Zubehörteil ist ein Hilfsgrillrost 21, der in Bohrungen 8 von benachbarten Funktionsteilen 4 eingesteckt ist. Der Grillgutbereich des Hilfsgrillrosts 21 hat einen teilringförmige Gestalt und kann zum Warmhalten von gegrilltem Grillgut dienen.

### Bezugszeichen

- 1: Kugelgrill
- 2: Grillschale
- 3: Innenseite
- 4: Funktionsteil
- 5: Grillrost
- 6: Auflagefläche
- 7: Oberseite
- 8: Bohrung
- 9: Schlitz
- 10: Anschlagflächen
- 11: Auflageelemente
- 12: Grillgutbereich
- 13: Tiefpunkt
- 14: Bein
- 15: Halterung
- 16: Aschetopf
- 17: Betätigungsgriff
- 18: Strebe
- 19: Spieß
- 20: Befestigungsstange
- 21: Hilfsgrillrost

## Patentansprüche

1. Kugelgrill (1) mit einer Grillschale (2) zur Aufnahme der Grillkohle und mehreren auf einer Innenseite (3) der Grillschale (2) an der Grillschale (2) befestigten Funktionsteilen (4) mit jeweils mehreren Auflageflächen (6), auf die ein Grillrost (5) in Abhängigkeit von seiner Ausrichtung mit unterschiedlichem Abstand zu der in der Grillschale (2) aufnehmbaren Grillkohle auf jeweils miteinander korrespondierende Auflageflächen (6) der Funktionsteile (4) auflegbar ist, **dadurch gekennzeichnet, dass** jedes Funktionsteil (4) vertikal und in Umfangsrichtung der Grillschale (2) versetzt zueinander angeordnete Auflageflächen (6) ausbildet.

2. Kugelgrill (1) nach Anspruch 1, wobei an einer Oberseite (7) eines Funktionsteils (4) mindestens eine Ausnehmung (8, 9) zur lösbaren Befestigung eines Zubehörteils (18, 19, 20, 21) ausgebildet ist.

3. Kugelgrill (1) nach Anspruch 2, wobei an der Oberseite (7) des Funktionsteils (4) zwei Bohrungen (8) ausgebildet sind, insbesondere zur Befestigung von einem Zubehörteil (18, 21), das sich in einem jeweils in eine Bohrung (8) von unterschiedlichen Funktionsteilen (4) eingesteckten Zustand über den Grillrost (5) erstreckt.

4. Kugelgrill (1) nach Anspruch 2 oder 3, wobei an der Oberseite (7) des Funktionsteils (4) ein länglicher Schlitz (9) ausgebildet ist, insbesondere zur Befestigung von einem sich ausgehend von den Funktionsteilen (4) außen um die Grillschale (2) von einem Funktionsteil (4) zu einem benachbarten Funktionsteil (4) erstreckendem Zubehörteil (20).

5. Kugelgrill (1) nach einem der vorhergehenden Ansprüche, wobei die Auflageflächen (6) eines jeden Funktionsteils (4) in ihrer Gesamtheit treppenförmig angeordnet sind.

6. Kugelgrill (1) nach einem der vorhergehenden Ansprüche, wobei jede Auflagefläche (6) einen unebenen Verlauf mit einem Tiefpunkt (13) aufweist.

7. Kugelgrill (1) nach einem der vorhergehenden Ansprüche, wobei jede Auflagefläche (6) seitlich von einer Anschlagsfläche (10) begrenzt ist.

8. Kugelgrill (1) nach einem der vorhergehenden Ansprüche, wobei der Grillrost (5) Auflageelemente (11) aufweist, die über einen Grillgutbereich (12) des Grillrosts (5) überstehen und mit denen der Grillrost (4) auf den korrespondierenden Auflageflächen (6) der Funktionsteile (4) aufliegt.

9. Kugelgrill (1) nach einem der vorhergehenden Ansprüche, wobei die Funktionsteile (4) mit einem auf die Außenseite der Grillschale (2) ragenden Befestigungselement an dem Kugelgrill (1) befestigt sind und auf der Außenseite der Grillschale (2) eine Halterung mit dem Befestigungselement an der Grillschale (2) befestigt ist.

## Claims

1. Barbecue grill (1) comprising a housing (2) for receiving the charcoal and a plurality of functional parts (4) fastened to the housing (2) on an inner side (3) of the housing (2), wherein each functional part (4) has a plurality of bearing surfaces (6), onto which a cooking grid (5) is able to be positioned, wherein the cooking grid (5) is positioned on corresponding bearing surfaces (6) of the functional parts (4) depending on the orientation of said cooking grid (5) at variable distances from the charcoal, **characterised in that** each functional part (4) has a plurality of bearing surfaces (6) arranged offset relative to one another vertically and in the peripheral direction of the housing (2).

2. Barbecue grill (1) according to Claim 1, wherein at least one recess (8, 9) is formed on an upper side (7) of a functional part (4) for the releasable fastening of an accessory (18, 19, 20, 21).

3. Barbecue grill (1) according to Claim 2, wherein two bores (8) are formed on the upper side (7) of the functional part (4), in particular for fastening an accessory (18, 21) which extends over the cooking grid (5) in a state inserted into respective bores (8) of different functional parts (4).

4. Barbecue grill (1) according to Claim 2 or 3, wherein an elongated slot (9) is formed on the upper side (7) of the functional part (4), in particular for fastening an accessory (20) extending from the functional parts (4) outwardly around the housing (2) from one functional part (4) to an adjacent functional part (4).

5. Barbecue grill (1) according to one of the preceding claims, wherein the bearing surfaces (6) of each functional part (4) are arranged as a whole in a stepped manner.

6. Barbecue grill (1) according to one of the preceding claims, wherein each bearing surface (6) has an uneven path with a low point (13).

7. Barbecue grill (1) according to one of the preceding claims, wherein each bearing surface (6) is defined laterally by a stop surface (10).

8. Barbecue grill (1) according to one of the preceding claims, wherein the cooking grid (5) comprises bearing elements (11) which protrude over a region for food to be grilled (12) of the cooking grid (5) and with which the cooking grid (5) bears on the corresponding bearing surfaces (6) of the functional parts (4).

9. Barbecue grill (1) according to one of the preceding claims, wherein the functional parts (4) are fastened to the barbecue grill (1) by a fastening element protruding to the outer side of the housing (2), and wherein a support is fastened by the fastening element to the housing (2) on the outer side of the housing (2).

## Revendications

1. Barbecue sphérique (1) avec un bac de barbecue (2) pour recevoir du charbon de bois et plusieurs parties fonctionnelles (4) fixées au bac de barbecue (2) sur un côté intérieure (3) du bac de barbecue (2) avec respectivement plusieurs surfaces de dépose (6), sur lesquelles il est possible de déposer une grille de cuisson (5) en fonction de son orientation avec une distance différente par rapport au charbon de bois pouvant être logé dans le bac de barbecue (2) sur des surfaces de dépose (6) des parties fonctionnelles (4), correspondait respectivement les unes avec les autres, **caractérise en ce que** chaque partie fonctionnelle (4) constitue des surfaces de dépose (6) disposées verticalement et décalées l'une par rapport à l'autre dans le sens périphérique du bac de barbecue (2).

2. Barbecue sphérique (1) selon la revendication 1, au moins un évidement (8, 9) étant constitué sur un côté supérieur (7) d'une partie fonctionnelle (4) pour la fixation amovible d'une pièce accessoire (18, 19, 20, 21.

3. Barbecue sphérique (1) selon la revendication 2, deux perçages (8) étant constitués sur le côté supérieur (7) de la partie fonctionnelle (4), notamment pour fixer une pièce accessoire (18, 21), qui s'étend sur la grille de cuisson (5) dans un état respectivement inséré dans un perçage (8) des parties fonctionnelles (4) différentes.

4. Barbecue sphérique (1) selon la revendication 2 ou 3, une fente (9) longitudinale étant constituée sur le côté supérieur (7) de la partie fonctionnelle (4), notamment pour fixer une pièce accessoire (20) s'étendant des parties fonctionnelles (4) à l'extérieur autour du bac de barbecue (2) d'une partie fonctionnelle (4) vers une partie fonctionnelle (4) voisine.

5. Barbecue sphérique (1) selon l'une quelconque des revendications précédentes, les surfaces de dépose (6) d'une partie fonctionnelle (4) étant disposées en forme de gradins dans leur totalité.

6. Barbecue sphérique (1) selon l'une quelconque des revendications précédentes, chaque surface de dépose (6) comportant une allure inégale avec un point profond (13).

7. Barbecue sphérique (1) selon l'une quelconque des revendications précédentes, chaque surface de dépose (6) étant limitée latéralement par une surface de butée (10).

8. Barbecue sphérique (1) selon l'une quelconque des revendications précédentes, la grille de cuisson (5) comportant des éléments de dépose (11), qui surmontent une zone de produit à griller (12) de la grille de cuisson (5) et avec lesquels la grille de cuisson (4) appuie sur les surfaces de dépose (6) correspondantes des parties fonctionnelles (4).

9. Barbecue sphérique (1) selon l'une quelconque des revendications précédentes, les parties fonctionnelles (4) étant fixées au barbecue (2) à bac sphérique (1) avec un élément de fixation dépassant sur le côté extérieur du bac de barbecue (2) et une fixation étant fixée sur le côté extérieur du bac de barbecue (2) avec l'élément de fixation.
